# EUROPÄISCHE PATENTANMELDUNG

(11) **EP 2 977 553 A1**
(43) Veröffentlichungstag der Anmeldung: **27.01.2016**
(21) Anmeldenummer: 15175864.6
(22) Anmeldetag: 08.07.2015
(51) Int. Cl.: F01D 5/16, F01D 5/22

(54) **VERSTIMMTES SCHAUFELGITTER FÜR EINE TURBOMASCHINE**

(30) Priorität: 22.07.2014 DE 102014214270
(71) Anmelder: MTU Aero Engines AG, 80995 München (DE)
(72) Erfinder: Hartung, Andreas, 81829 München (DE); Stiehler, Frank, 04924 Bad Liebenwerda (DE); Pernleitner, Martin, 85221 Dachau (DE)

(57) **Zusammenfassung**

Die vorliegende Erfindung betrifft ein Schaufelgitter für eine Turbomaschine, das eine erste Gruppe (A) mit wenigstens zwei untereinander gleichartigen ersten Schaufelanordnungen (A1,...A5), an denen einander gleiche erste Körperanordnungen mit je wenigstens einem ersten Körper (a) beweglich gelagert sind; und eine zweite Gruppe (B) mit wenigstens zwei untereinander gleichartigen und zu den ersten Schaufelanordnungen verschiedenartigen zweiten Schaufelanordnungen (B1, B2) aufweist, an denen einander gleiche zweite Körperanordnungen mit je wenigstens einem zweiten Körper (b) beweglich gelagert sind, wobei erste und zweite Körperanordnungen voneinander verschieden sind.

## Beschreibung

Die Arbeiten, die zu dieser Erfindung geführt haben, wurden gemäß der *Finanzhilfevereinbarung* Nr. CSJU-GAM-SAGE-2008-001 im Zuge des Siebten Rahmenprogramms der Europäischen Union *(****FP7*/*****2007-2013**)* für Clean Sky Joint Technology Initiative gefördert.

Die vorliegende Erfindung betrifft ein Schaufelgitter für eine Turbomaschine, insbesondere eine Gasturbine, insbesondere ein Flugtriebwerk, eine Turbomaschine mit einem solchen Schaufelgitter sowie ein Verfahren zum Herstellen eines solchen Schaufelgitters.

Um Vibrations-, insbesondere Resonanzphänomene zu reduzieren, können die Eigenfrequenzen von Schaufelgittern verstimmt werden. Nach der WO 2012/038406 A1 ist es hierzu bekannt, verschiedenartige und hierdurch in ihren Eigenfrequenzen verstimmte Schaufeln vorzusehen. Die WO 2012/038406 A1 schlägt demgegenüber vor, solche verschiedenartige Schaufeln dadurch zu ersetzen, dass stattdessen bei gleichartigen Schaufeln unterschiedliche Dämpfungselemente vorgesehen werden. Durch die gleichartigen Schaufeln werde ein Performanceverlust vermieden.

Eine Aufgabe einer Ausführung der vorliegenden Erfindung ist es, eine Turbomaschine zur Verfügung zu stellen.

Diese Aufgabe wird durch ein Schaufelgitter mit den Merkmalen des Anspruchs 1 gelöst. Ansprüche 9, 10 stellen eine Turbomaschine mit einem solchen Schaufelgitter bzw. ein Verfahren zum Herstellen eines solchen Schaufelgitters unter Schutz. Vorteilhafte Ausführungsformen der Erfindung sind Gegenstand der Unteransprüche.

Nach einem Aspekt der vorliegenden Erfindung weist ein Schaufelgitter für eine Turbomaschine bzw. ein Schaufelgitter einer Turbomaschine eine erste Gruppe mit wenigstens zwei, insbesondere wenigstens drei, insbesondere wenigstens vier Schaufelanordnungen auf, die gleichartig sind und daher im Folgenden als erste Schaufelanordnungen bezeichnet werden.

An wenigstens zwei, insbesondere wenigstens drei, insbesondere wenigstens vier ersten, untereinander gleichartigen Schaufelanordnungen, insbesondere einer Mehrheit aller ersten untereinander gleichartigen Schaufelanordnungen, insbesondere allen ersten, untereinander gleichartigen Schaufelanordnungen ist bzw. wird jeweils eine erste Körperanordnung mit je wenigstens einem ersten Körper beweglich gelagert, wobei diese ersten Körperanordnungen einander gleich sind.

Weist das Schaufelgitter also beispielsweise 20 Schaufeln auf, von denen 12 Schaufeln untereinander gleichartig sind, so sind bzw. werden an wenigstens 7 dieser ersten Schaufeln untereinander gleiche Körperanordnungen beweglich gelagert, wenn an einer Mehrheit aller ersten untereinander gleichartigen Schaufelanordnungen jeweils eine der einander gleichen ersten Körperanordnung gelagert ist bzw. wird.

Das Schaufelgitter weist weiterhin eine zweite Gruppe mit wenigstens zwei, insbesondere wenigstens drei, insbesondere wenigstens vier Schaufelanordnungen auf, die untereinander gleichartig und zu den ersten Schaufelanordnungen verschiedenartig sind und daher im Folgenden als zweite Schaufelanordnungen bezeichnet werden.

An wenigstens zwei, insbesondere wenigstens drei, insbesondere wenigstens vier dieser zweiten, untereinander gleichartigen und zu den ersten Schaufelanordnungen verschiedenartigen Schaufelanordnungen, insbesondere einer Mehrheit aller zweiten, untereinander gleichartigen und zu den ersten Schaufelanordnungen verschiedenartigen Schaufelanordnungen, insbesondere allen zweiten, untereinander gleichartigen und zu den ersten Schaufelanordnungen verschiedenartigen Schaufelanordnungen ist bzw. wird jeweils eine zweite Körperanordnung mit je wenigstens einem zweiten Körper beweglich gelagert, wobei diese zweiten Körperanordnungen einander gleich sind.

Weist das Schaufelgitter also beispielsweise drei untereinander gleichartige Schaufeln A1, A2 und A3 sowie vier untereinander gleichartige Schaufeln B1, B2, B3 und B4 auf, die zu den Schaufeln A1, A2 und A3 verschiedenartig sind, so bilden die Schaufeln A1, A2 und A3 erste Schaufelanordnungen und die Schaufeln B1, B2, B3 und B4 zweite Schaufelanordnungen im Sinne der vorliegenden Erfindung.

Nach einem Aspekt der vorliegenden Erfindung sind die ersten und zweiten Körperanordnungen voneinander verschieden. Mit anderen Worten werden bzw. sind die Körperanordnungen den Schaufelanordnungen gezielt bzw. planmäßig artspezifisch bzw. in Abhängig von der Art der Schaufelanordnung zugeordnet. Es hat sich überraschend herausgestellt, dass eine solche Zuordnung unterschiedlicher Körperanordnungen zu verschiedenartigen Schaufelanordnungen unerwünschte Schwingungen des Schaufelgitters stärker reduzieren kann als dies der Fall ist, wenn unterschiedliche Körperanordnungen wahllos bzw. schaufelanordnungsartunabhängig oder auf gleichartige Schaufelanordnungen verteilt werden. Dabei kann diese Zuordnung in einer Weiterbildung injektiv, surjektiv oder bijektiv sein. In einer Ausführung weisen entsprechend erste Schaufelanordnungen nur erste Körperanordnungen und zweite Schaufelanordnungen nur zweite Körperanordnungen auf. Zusätzlich oder alternativ werden bzw. sind in einer Ausführung erste Körperanordnungen nur an ersten Schaufelanordnungen und zweite Körperanordnungen nur an zweiten Schaufelanordnungen gelagert.

In einer Ausführung besteht das Schaufelgitter aus der ersten und zweiten Gruppe, d.h. weist nur zwei verschiedene Arten von Schaufelanordnungen auf. In einer anderen Ausführung weist das Schaufelgitter außer den ersten und zweiten Schaufelanordnungen noch wenigstens eine dritte Gruppe mit einer, zwei oder mehr Schaufelanordnungen auf, die untereinander gleichartig und zu den ersten und zweiten Schaufelanordnungen verschiedenartig sind und daher im Folgenden als dritte Schaufelanordnungen bezeichnet werden.

In einer Ausführung sind bzw. werden an wenigstens einer, insbesondere wenigstens zwei, insbesondere wenigstens drei, insbesondere wenigstens vier solcher dritten, untereinander gleichartigen und zu den ersten und zweiten Schaufelanordnungen verschiedenartigen dritten Schaufelanordnungen, insbesondere einer Mehrheit von dritten, untereinander gleichartigen und zu den ersten und zweiten Schaufelanordnungen verschiedenartigen Schaufelanordnungen, insbesondere allen dritten, untereinander gleichartigen und zu den ersten und zweiten Schaufelanordnungen verschiedenartigen Schaufelanordnungen jeweils eine dritte Körperanordnung mit je wenigstens einem dritten Körper beweglich gelagert, wobei diese dritten Körperanordnungen einander gleich und von den ersten und zweiten Körperanordnungen verschieden sind.

Weist das Schaufelgitter also beispielsweise drei untereinander gleichartige Schaufeln A1, A2 und A3, vier untereinander gleichartige Schaufeln B1, B2, B3 und B4, die zu den Schaufeln A1, A2 und A3 verschiedenartig sind, sowie zwei untereinander gleichartige Schaufeln C1 und C2 auf, die zu den Schaufeln A1, A2 und A3 sowie den Schaufeln B1, B2, B3 und B4 verschiedenartig sind, so bilden die Schaufeln A1, A2 und A3 erste Schaufelanordnungen, die Schaufeln B1, B2, B3 und B4 zweite Schaufelanordnungen und die Schaufeln C1 und C2 dritte Schaufelanordnungen im Sinne der vorliegenden Erfindung.

Dabei sind bzw. werden wenigstens zwei gleiche Körperanordnungen an Schaufelanordnungen einer der Gruppen und wenigstens zwei weitere hiervon verschiedene und untereinander gleiche Körperanordnungen an Schaufelanordnungen wenigstens einer anderen der Gruppen beweglich gelagert. Beispielsweise können die drei Schaufeln A1, A2 und A3 mit gleichen Körperanordnungen a und die drei Schaufeln B1, B2 und B3 mit gleichen Körperanordnungen b bestückt sein bzw. werden, während die vierte Schaufel B4 und die Schaufeln C1, C2 keine Körperanordnungen aufweisen. Vorzugsweise sind bzw. werden jedoch alle drei Schaufeln A1, A2 und A3 mit gleichen Körperanordnungen a, alle vier Schaufeln B1, B2, B3 und B4 mit gleichen Körperanordnungen b und alle zwei Schaufeln C1 und C2 mit gleichen Körperanordnungen c bestückt.

Die Schaufelanordnungen der Gruppen können gleich- bzw. regelmäßig, insbesondere einfach oder paarweise alternierend, über den Umfang des Schaufelgitters verteilt sein bzw. werden, also beispielsweise A1, B1, A2, B2,... (einfach alternierend) oder A1, A2, B1, B2, A3,...(paarweise alternierend). Hierdurch kann vorteilhaft ein möglichst rotationssymmetrisches Schaufelgitter dargestellt werden. Gleichermaßen können die Schaufelanordnungen der Gruppen auch ungleich- bzw. unregelmäßig, insbesondere stochastisch, über den Umfang des Schaufelgitters verteilt sein bzw. werden, also beispielsweise A1, B1, B2, A2, A3,.... Hierdurch kann vorteilhaft eine bessere Frequenzverstimmung dargestellt werden.

Ein oder mehrere, insbesondere alle Körper einer Körperanordnung können insbesondere in bzw. innerhalb einer Schaufel angeordnet werden bzw. sein. Gleichermaßen können ein oder mehrere, insbesondere alle Körper einer Körperanordnung insbesondere zwischen zwei in Umfangsrichtung benachbarten Schaufeln angeordnet und an beiden beweglich gelagert werden bzw. sein. Zur kompakteren Darstellung werden daher vorliegend sowohl einzelne Schaufeln als auch zwei, drei oder mehr in Umfangsrichtung benachbarten Schaufeln gemeinsam als Schaufelanordnung bezeichnet.

Entsprechend können in einer Ausführung die Schaufelanordnungen der ersten, zweiten und/oder wenigstens einer dritten Gruppe jeweils genau eine Schaufel aufweisen, an, insbesondere in, der die entsprechende Körperanordnung beweglich gelagert ist. Gleichermaßen können in einer Ausführung die Schaufelanordnungen der ersten, zweiten und/oder wenigstens einer dritten Gruppe jeweils ein Paar, drei oder mehr in Umfangsrichtung benachbarter Schaufeln aufweisen, an denen die Körperanordnung jeweils beweglich gelagert ist bzw. wird, insbesondere ein Paar in Umfangsrichtung benachbarter Schaufeln sein, an denen die Körperanordnung jeweils beweglich gelagert ist bzw. wird. Die Schaufeln einer Schaufelanordnung, insbesondere also ein in Umfangsrichtung benachbartes Schaufelpaar, das eine Schaufelanordnung bildet, können gleich- oder verschiedenartig sein.

Sind beispielsweise erste Schaufeln A1, A2, A3,... und zweite Schaufeln B1, B2, B3,... paarweise alternierend angeordnet, so bilden zwei in Umfangsrichtung benachbarte erste bzw. zweite Schaufeln jeweils eine erste bzw. zweite Schaufelanordnung, ein zwischen den beiden ersten bzw. zweiten Schaufeln angeordneter und jeweils an diesen beiden Schaufeln beweglich gelagerter Körper eine erste Körperanordnung a bzw. zweite Körperanordnung b, wobei die Körperanordnungen a untereinander gleich und die Körperanordnungen B untereinander und von den Körperanordnungen a verschieden sind:
(A1-a-A2)-a-(B1-b-B2)-a-(A3-a-A4)-a-(B3-b-B4)...

Wie vorstehend ausgeführt, werden bzw. sind in einer Ausführung an einer Mehrheit unter den untereinander gleichartigen ersten Schaufelanordnungen einander gleiche erste Körperanordnungen und/oder an einer Mehrheit unter den untereinander gleichartigen zweiten Schaufelanordnungen einander gleiche zweite Körperanordnungen beweglich gelagert, wobei in einer Weiterbildung an einer Mehrheit unter untereinander gleichartigen dritten Schaufelanordnungen einander gleiche dritte Körperanordnungen beweglich gelagert sind bzw. werden.

In einer Ausführung sind bzw. werden zueinander verschiedenartige Schaufelanordnung, insbesondere planmäßig, verschieden hergestellt, insbesondere verschieden ur- und/oder umgeformt und/oder bearbeitet, während entsprechend untereinander gleichartige Schaufelanordnung baugleich bzw. im Rahmen der Fertigungstoleranzen identisch hergestellt, insbesondere ur- und/oder umgeformt und/oder, insbesondere konturgebend, bearbeitet sind bzw. werden. So können insbesondere alle ersten Schaufelanordnungen mit demselben ersten Gußmodell urgeformt werden bzw. sein, alle zweiten Schaufelanordnungen mit demselben zweiten Gußmodell, das sich von dem ersten Gußmodell in seiner Kontur unterscheidet. Werden die Schaufelanordnungen nach einem Ur- oder Umformen konturgebend bearbeitet, so können alle ersten Schaufelanordnungen mit demselben ersten Bearbeitungs-, beispielsweise Fräßmodell bearbeitet werden bzw. sein, alle zweiten Schaufelanordnungen mit demselben zweiten Bearbeitungsmodell, das sich von dem ersten Bearbeitungsmodell in seiner Kontur unterscheidet. Gleichermaßen können die Schaufelanordnungen zunächst planmäßig baugleich bzw. theoretisch identisch hergestellt und dann aufgrund ihrer bei der Fertigung auftretenden Abweichungen in erste, zweite und gegebenenfalls dritte Schaufelanordnungen sortiert werden.

Entsprechend weisen in einer Ausführung erste, zweite und gegebenenfalls dritte Schaufelanordnungen unterschiedliche Konturen, Massen und/oder Massenverteilungen auf. Insbesondere können sich erste, zweite und gegebenenfalls dritte Schaufelanordnungen durch eine unterschiedliche Anzahl, Form und/oder Anordnung von Aussparungen, insbesondere Bohrungen, Hohlräumen, Kürzungen oder dergleichen unterscheiden.

Weisen die Schaufelanordnungen einen monokristallinen Werkstoff auf, so können erste, zweite und gegebenenfalls dritte Schaufelanordnungen zusätzlich oder alternativ zu unterschiedliche Konturen, Massen und/oder Massenverteilungen unterschiedliche Kristallorientierungen aufweisen. In diesem Fall kann das unterschiedliche Herstellen ein Sortieren in entsprechende Chargen umfassen, so dass beispielsweise ein Urformen und Einsortieren einer monokristallinen Schaufel entsprechend ihrer gemessenen Kristallorientierung in eine erste Gruppe und ein Urformen und Einsortieren einer weiteren monokristallinen Schaufel entsprechend ihrer gemessenen, anderen Kristallorientierung in eine zweite Gruppe ein verschiedenes Herstellen im Sinne der vorliegenden Erfindung darstellt.

In einer Ausführung unterscheiden sich die Eigenfrequenzen wenigstens einer Eigenform derselben Schaufeln zwischen ersten Schaufelanordnungen einerseits und zweiten Schaufelanordnungen andererseits und gegebenenfalls zwischen ersten und dritten Schaufelanordnungen und zwischen zweiten und dritten Schaufelanordnungen um wenigstens 1%, insbesondere wenigstens 5%, während die Eigenfrequenzen dieser Eigenform derselben Schaufeln zwischen untereinander gleichartige Schaufelanordnung sich um höchstens 0,9%, insbesondere höchstens 0,1% unterscheiden.

Insbesondere unterscheiden sich in einer Weiterbildung die Eigenfrequenzen einer, insbesondere der ersten, Torsionseigenform, insbesondere um eine vorgegebene Achse, insbesondere eine Fädelachse oder die radiale Richtung, und/oder die Eigenfrequenzen einer, insbesondere der ersten, Biegeeigenform, insbesondere um eine vorgegebene Achse, insbesondere eine Fädelachse, Profilsehnenrichtung, Schaufelblattdickenrichtung, radiale, axiale oder Umfangsrichtung, und/oder die jeweils niedrigsten Eigenfrequenzen, der in Rotationsrichtung jeweils vordersten, insbesondere einzigen, Schaufeln aller ersten Schaufelanordnungen von den Eigenfrequenzen dieser Eigenform bzw. den jeweils niedrigsten Eigenfrequenzen der in Rotationsrichtung jeweils vordersten, insbesondere einzigen, Schaufeln aller zweiten Schaufelanordnungen um wenigstens 1%, insbesondere wenigstens 5%, und in einer Weiterbildung die Eigenfrequenzen dieser Eigenform bzw. die jeweils niedrigsten Eigenfrequenzen der in Rotationsrichtung jeweils vordersten, insbesondere einzigen, Schaufeln aller dritten Schaufelanordnungen um wenigstens 1%, insbesondere wenigstens 5%, von den Eigenfrequenzen dieser Eigenform bzw. den jeweils niedrigsten Eigenfrequenzen der in Rotationsrichtung jeweils vordersten, insbesondere einzigen, Schaufeln aller ersten und zweiten Schaufelanordnungen, während die Eigenfrequenzen dieser Eigenform bzw. die jeweils niedrigsten Eigenfrequenzen der in Rotationsrichtung jeweils vordersten, insbesondere einzigen, Schaufeln aller ersten Schaufelanordnungen untereinander sich um höchstens 0,9%, insbesondere höchstens 0,1% unterscheiden, die Eigenfrequenzen dieser Eigenform bzw. jeweils niedrigsten Eigenfrequenzen der in Rotationsrichtung jeweils vordersten, insbesondere einzigen, Schaufeln aller zweiten Schaufelanordnungen untereinander sich um höchstens 0,9%, insbesondere höchstens 0,1% unterscheiden, und in der Weiterbildung die Eigenfrequenzen dieser Eigenform bzw. jeweils niedrigsten Eigenfrequenzen der in Rotationsrichtung jeweils vordersten, insbesondere einzigen Schaufeln aller dritten Schaufelanordnungen untereinander sich um höchstens 0,9%, insbesondere höchstens 0,1% unterscheiden.

Mit anderen Worten kann eine Abweichung einer vorgegebenen Eigenfrequenz zwischen Schaufeln deren Zuordnung zu einer ersten, zweiten bzw. gegebenenfalls dritten Schaufelanordnungsart bestimmen.

In einer Ausführung bilden die zwei Schaufelanordnungen des Schaufelgitters, die sich in ihrer Masse, Massenverteilung, Kristallorientierung, Kontur und/oder der Eigenfrequenz wenigstens einer vorgegebenen Eigenform oder der niedrigsten Eigenfrequenz am stärksten unterscheiden, eine erste und eine zweite Schaufelanordnung im Sinne der vorliegenden Erfindung. In einer Weiterbildung bilden die zwei, drei oder vier Schaufelanordnungen des Schaufelgitters, die in ihrer Masse, Massenverteilung, Kristallorientierung, Kontur, Eigenfrequenz dieser Eigenform bzw. niedrigsten Eigenfrequenz dieser ersten Schaufelanordnung am ähnlichsten sind, ebenfalls erste Schaufelanordnungen im Sinne der vorliegenden Erfindung, und die zwei, drei oder vier Schaufelanordnungen des Schaufelgitters, die in ihrer Masse, Massenverteilung, Kristallorientierung, Kontur, Eigenfrequenz dieser Eigenform bzw. niedrigsten Eigenfrequenz dieser zweiten Schaufelanordnung am ähnlichsten sind, ebenfalls zweite Schaufelanordnungen im Sinne der vorliegenden Erfindung.

In einer Ausführung sind bzw. werden somit zueinander verschiedenartige Schaufelanordnungen in wenigstens einer Eigenfrequenz gegeneinander planmäßig verstimmt, und untereinander gleichartige Schaufelanordnungen in keiner Eigenfrequenz gegeneinander planmäßig verstimmt.

In einer Ausführung weisen voneinander verschiedene Körperanordnungen eine unterschiedliche Anzahl von Körpern auf. So können beispielsweise erste Körperanordnungen jeweils genau einen Körper und zweite Körperanordnungen jeweils wenigstens zwei gleiche oder verschiedene Körper aufweisen, die an der jeweiligen Schaufelanordnung beweglich gelagert sind bzw. werden. Zusätzlich oder alternativ weisen voneinander verschiedene Körperanordnungen in einer Ausführung Körper mit, insbesondere über die Fertigungstoleranz hinaus, unterschiedlichen Konturen, Massen und/oder Massenverteilungen auf. So können beispielsweise erste Körperanordnungen jeweils einen, insbesondere um wenigstens 1%, schweren Körper und zweite Körperanordnungen jeweils einen, insbesondere um wenigstens 1%, leichteren Körper und/oder erste Körperanordnungen jeweils einen zylindrischen und zweite Körperanordnungen jeweils einen sphärischen Körper aufweisen, die an der jeweiligen Schaufelanordnung beweglich gelagert sind bzw. werden. Zusätzlich oder alternativ weisen voneinander verschiedene Körperanordnungen in einer Ausführung Körper mit unterschiedlichen Positionen und/oder Orientierungen relativ zu der jeweiligen Schaufelanordnung und/oder unterschiedlichen Lagerungen an der jeweiligen Schaufelanordnung auf. So können beispielsweise erste Körperanordnungen jeweils einen an einem Außendeckband gelagerten und zweite Körperanordnungen jeweils einen an einem Innendeckband bzw. Schaufelfuß gelagerten Körper und/oder erste Körperanordnungen jeweils einen kegelförmigen Körper, dessen Spitze nach radial innen orientiert ist, und zweite Körperanordnungen jeweils einen kegelförmigen Körper, dessen Spitze nach radial außen orientiert ist, aufweisen.

In einer Ausführung verändern voneinander verschiedene Körperanordnungen die Eigenfrequenz wenigstens einer Eigenform der Schaufelanordnungen, an denen sie beweglich gelagert sind, um wenigstens 1%, insbesondere wenigstens 5%, unterschiedlich, während entsprechend gleiche Körperanordnungen die Eigenfrequenzen der Schaufelanordnungen, an denen sie beweglich gelagert sind, um höchstens 0,9%, insbesondere höchstens 0,1 % unterschiedlich verändern.

In einer Ausführung verstimmen somit zueinander gleiche Körperanordnungen dieselbe Schaufelanordnung gleich, während voneinander verschiedene Körperanordnungen dieselbe Schaufelanordnung planmäßig unterschiedlich verstimmen.

Weisen beispielsweise die sechs Schaufeln eines Schaufelgitters ohne in ihnen angeordnete Körper Eigenfrequenz 1F₁₁, 1F₁₂, 1F₁₃, 1F₂₁, 1F₂₂, 1F₂₃ auf, und ändern die Körper k₁₁, k₁₂, k₁₃, k₂₁, k₂₂, k₂₃ diese Eigenfrequenz jeweils um Δᵢⱼ, wobei gilt: |(1F₁ᵢ - 1Fᵢⱼ)/1F₁ᵢ| ≤ 0,009 und |(1F₂ᵢ - 1F₂ⱼ)/1F₂ᵢ| ≤ 0,009 und |(1F₁ᵢ - 1F₂ᵢ)/1F₁ᵢ| ≥ 0,01 V i = {1, 2, 3} und j = {1, 2, 3} sowie |(Δ₁ᵢ - Δ₁ⱼ)/Δ₁ᵢ| ≤ 0,009 und |(Δ₂ᵢ - Δ₂ⱼ)/Δ₂ᵢ| ≤ 0,009 und |(Δ₁ᵢ - Δ₂ᵢ)/ Δ₁ᵢ| ≥ 0,01 ∀ i = { 1, 2, 3} und j = {1, 2, 3}, so bilden die Schaufeln mit den Eigenfrequenz 1F₁₁, 1F₁₂, 1F₁₃ erste Schaufelanordnungen und die Schaufeln mit den Eigenfrequenz 1F₂₁, 1F₂₂, 1F₂₃ zweite Schaufelanordnungen sowie die Körper k₁₁, k₁₂, k₁₃ erste Körperanordnungen und die Körper k₂₁, k₂₂, k₂₃ zweite Körperanordnungen im Sinne der vorliegenden Erfindung, so dass erfindungsgemäß planmäßig und schaufelanordnungsartspezifisch die ersten Körperanordnungen an den ersten Schaufelanordnungen und die zweiten Körperanordnungen planmäßig an den zweitens Schaufelanordnungen gelagert sind bzw. werden.

Zur Verstimmung von Schaufeln sind aus betriebsinterner Praxis einerseits Dämpfungskörper bekannt, die im Betrieb die Schaufelanordnungen permanent, insbesondere zentrifugalkraftbedingt, kontaktieren und durch Reibung kinetische Energie dissipieren. Andererseits sind aus betriebsinterner Praxis Impulskörper bekannt, die derart dimensioniert und gelagert sind, dass sie im Betrieb Stöße mit Wandungen der Schaufelanordnungen ausführen. Obwohl hier kaum Dissipation in Wärme auftritt, kann auch hierdurch das Schwingungsverhalten des Schaufelgitters vorteilhaft beeinflusst werden. Entsprechend kann ein Körper einer Körperanordnung in einer Ausführung ein Dämpfungskörper sein, der derart an der jeweiligen Schaufelanordnung gelagert ist bzw. wird, dass er im Betrieb die Schaufelanordnungen, wenigstens im Wesentlichen, permanent, insbesondere zentrifugalkraftbedingt, kontaktiert bzw. hierzu eingerichtet bzw. vorgesehen ist, um durch Reibung kinetische Energie zu dissipieren. Gleichermaßen kann in einer Ausführung ein Körper einer Körperanordnung ein Impulskörper sein, der derart an der jeweiligen Schaufelanordnung gelagert ist bzw. wird, dass er im Betrieb Stöße mit Wandungen der Schaufelanordnungen ausführt bzw. hierzu eingerichtet bzw. vorgesehen ist. Der Impulskörper kann derart gelagert sein, dass er zwischen den Stößen in Freiflugphasen die jeweilige Schaufelanordnung nicht kontaktiert.

In einer Ausführung sind bzw. werden jeweils ein oder mehrere erste Körper einer ersten Körperanordnungen an einem Außendeckband der jeweiligen ersten Schaufelanordnung angeordnet bzw. beweglich gelagert. Zusätzlich oder alternativ sind bzw. werden jeweils ein oder mehrere zweite Körper einer zweiten Körperanordnungen an einem Außendeckband, einem Innendeckband oder einem Schaufelblatt der jeweiligen zweiten Schaufelanordnung angeordnet bzw. beweglich gelagert. Gleichermaßen können in einer Ausführung jeweils ein oder mehrere erste Körper einer ersten Körperanordnungen an einem Innendeckband oder einem Schaufelblatt der jeweiligen ersten Schaufelanordnung angeordnet bzw. beweglich gelagert sein bzw. werden. Zusätzlich oder alternativ sind bzw. werden dann jeweils ein oder mehrere zweite Körper einer zweiten Körperanordnungen an einem Außendeckband, einem Innendeckband oder einem Schaufelblatt der jeweiligen zweiten Schaufelanordnung angeordnet bzw. beweglich gelagert.

Nach einem Aspekt der vorliegenden Erfindung weist eine Turbomaschine, insbesondere eine Gasturbine, insbesondere ein(e) Flugtriebwerk(gasturbine), wenigstens eine Turbinen- und/oder wenigstens eine Verdichterstufe mit einem hier beschriebenen Schaufelgitter, insbesondere einem drehbaren Laufgitter oder einem feststehenden Leitgitter auf.

Nach einem Aspekt der vorliegenden Erfindung weist ein Verfahren zum Herstellen eines hier beschriebenen Schaufelgitters die Schritte auf:
- Anordnen der ersten Gruppe von ersten Schaufelanordnungen, insbesondere an einem Rotor der Turbomaschine, an denen, insbesondere vorab, dabei oder anschließend, planmäßig bzw. in Abhängigkeit von der Art der ersten Schaufelanordnungen die einander gleichen ersten Körperanordnungen beweglich gelagert werden, und
- Anordnen der zweiten Gruppe von zu den ersten Schaufelanordnungen verschiedenartigen zweiten Schaufelanordnungen, insbesondere an dem Rotor, an denen, insbesondere vorab, dabei oder anschließend, planmäßig bzw. in Abhängigkeit von der Art der zweiten Schaufelanordnungen die einander gleichen und von den ersten Körperanordnungen verschieden zweite Körperanordnungen beweglich gelagert werden.

In einer Ausführung werden hierzu ein Vorrat an ersten und zweiten Schaufelanordnungen sowie an ersten und zweiten Körperanordnungen bereitgestellt und die Schaufelanordnungen vor, bei oder nach ihrer Montage, insbesondere an einem Rotor oder Gehäuse der Turbomaschine, artspezifisch mit den jeweiligen Körperanordnungen bestückt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil eines Laufgitters einer Gasturbine nach einer Ausführung der vorliegenden Erfindung in einem Querschnitt und in einem abgewickelten Zustand; und
- Fig. 2: einen Teil eines Laufgitters einer Gasturbine nach einer weiteren Ausführung der vorliegenden Erfindung in Fig. 1 entsprechender Darstellung.

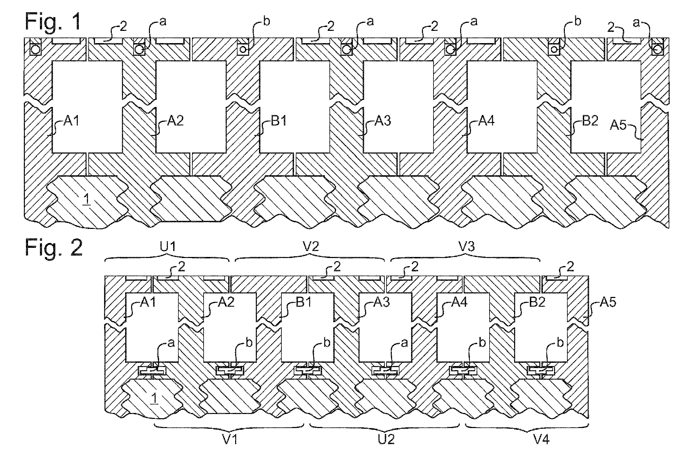

Fig. 1 zeigt einen Teil eines Laufgitters einer Gasturbine nach einer Ausführung der vorliegenden Erfindung in einem Querschnitt senkrecht zu einer Rotationsachse der Gasturbine.

Das Laufgitter weist eine erste Gruppe von gleichartigen ersten Schaufelanordnungen in Form von einzelnen, an einem Rotor 1 der Gasturbine mittels eines Tannenbaumfußes befestigten Laufschaufeln auf, von denen in Fig. 1 fünf gleichartige erste Laufschaufeln A1, A2,..., A5 (teilweise) dargestellt sind.

Diese untereinander gleichartigen ersten Schaufelanordnungen A1, A2,... sind baugleich hergestellt und weisen entsprechend dieselben Konturen, Massen, Massenverteilungen und Eigenfrequenzen auf, insbesondere dieselben Aussparungen 2.

In den Außendeckbändern aller ersten Schaufelanordnungen ist jeweils eine erste Körperanordnung mit je einem ersten Körper a beweglich gelagert, wobei diese Körperanordnungen einander gleich sind. Die beweglich gelagerten ersten Körper a verbessern im Betrieb das Schwingungsverhalten des Laufgitters.

Das Schaufelgitter weist weiterhin eine zweite Gruppe B von untereinander gleichartigen Schaufelanordnungen in Form von einzelnen, an dem Rotor mittels eines Tannenbaumfußes befestigten Laufschaufeln auf, von denen in Fig. 1 zwei gleichartige zweite Laufschaufeln B1, B2 dargestellt sind.

Diese untereinander gleichartigen zweiten Schaufelanordnungen B1, B2 sind ebenfalls baugleich hergestellt und weisen entsprechend dieselben Konturen, Massen, Massenverteilungen und Eigenfrequenzen auf. Sie sind jedoch verschiedenartig zu den ersten Schaufelanordnungen A hergestellt, und weisen entsprechend zu den ersten Schaufelanordnungen A unterschiedliche Konturen, Massen, Massenverteilungen und Eigenfrequenzen auf. Exemplarisch weisen die zweiten Schaufelanordnungen im Gegensatz zu den ersten Schaufelanordnungen A die Aussparungen am Außendeckband nicht auf, so dass sich insbesondere ihre Eigenfrequenzen 1E, 1F um wenigstens 1% von den Eigenfrequenzen 1E bzw. 1F der ersten Schaufelanordnungen unterscheiden.

In den Außendeckbändern aller zweiten Schaufelanordnungen ist jeweils eine zweite Körperanordnung mit je einem zweiten Körper b beweglich gelagert, wobei diese Körperanordnungen einander gleich sind. Die beweglich gelagerten zweiten Körper b verbessern im Betrieb ebenfalls das Schwingungsverhalten des Laufgitters.

Die ersten Körper(anordnungen) a und zweiten Körper(anordnungen) b sind voneinander verschieden. Im Ausführungsbeispiel der Fig. 1 bestehen die ersten Körperanordnungen exemplarisch aus je einem kugelförmigen bzw. sphärischen Körper a mit einer größeren Kontur und Masse, die hiervon verschiedenen zweiten Körperanordnungen exemplarisch aus je einem kugelförmigen bzw. sphärischen Körper b mit einer demgegenüber kleineren Kontur und Masse.

Somit werden bzw. sind die Körperanordnungen a, b den Schaufelanordnungen A, B gezielt bzw. planmäßig artspezifisch bzw. in Abhängig von der Art der Schaufelanordnung zugeordnet. Dadurch können unerwünschte Schwingungen des Schaufelgitters stärker reduzieren werden.

Fig. 2 zeigt in Fig. 1 entsprechender Weise einen Teil eines Laufgitters einer Gasturbine nach einer weiteren Ausführung der vorliegenden Erfindung. Einander entsprechende Elemente sind durch identische Bezugszeichen identifiziert, so dass auf die vorstehende Beschreibung Bezug genommen und nachfolgend auf Unterschiede eingegangen wird.

In der Ausführung der Fig. 2 weisen die ersten Körper a und die zweiten Körper b exemplarisch keine unterschiedliche kugelförmige, sondern dieselbe orientierbare Kontur mit einem Absatz bzw. einer abgeflachten Spitze auf. Sie sind jeweils zwischen zwei in Umfangsrichtung (horizontal in Fig. 2) benachbarten Laufschaufeln angeordnet, greifen in entsprechende Hohlräume in den Innendeckbändern dieser Schaufeln ein und sind somit jeweils an beiden Laufschaufeln eines Paars in Umfangsrichtung benachbarter Laufschaufeln beweglich gelagert.

Die ersten Körper a und die zweiten Körper b weisen voneinander verschiedene Orientierungen relativ zu der jeweiligen Schaufelanordnung auf: exemplarisch weisen in der Ausführung der Fig. 2 die abgeflachten Spitzen der ersten Körper a nach radial außen (nach oben in Fig. 2), die abgeflachten Spitzen der zweiten Körper b hingegen umgekehrt nach radial innen.

Untereinander gleichartige erste Schaufelanordnungen U1, U2,... bestehen in der Ausführung der Fig. 2 jeweils aus einem Paar in Umfangsrichtung benachbarter gleichartiger Schaufeln A1+A2, A3+A4,..., während zu den ersten Schaufelanordnungen verschiedenartige und untereinander gleichartige zweite Schaufelanordnungen V1, V2, V3, V4... jeweils aus einem Paar in Umfangsrichtung benachbarter verschiedenartiger Schaufeln A2+B1, B1+A3, A4+B2, B2+A5... bestehen.

An den beiden Laufschaufeln aller Paare erster Schaufelanordnungen U1, U2,... ist jeweils eine erste Körperanordnung mit je einem ersten Körper a beweglich gelagert, an den beiden Laufschaufeln aller Paare zweiter Schaufelanordnungen V1, V2,... hingegen jeweils eine zweite Körperanordnung mit je einem zweiten Körper b. Man erkennt, dass die Orientierung der einzelnen Körper (radial nach außen/innen) und damit die Körperanordnung (a/b) von der jeweiligen Schaufelanordnung, d.h. dem Paar Laufschaufeln abhängt, zwischen denen der Körper angeordnet und an denen er jeweils beweglich gelagert ist. Dabei wird auch deutlich, dass allgemein in einer Ausführung der vorliegenden Erfindung dieselbe Laufschaufel gleichermaßen Teil einer ersten und einer zweiten Schaufelanordnung sein kann. In der Ausführung der Fig. 1 ist hingegen jede Laufschaufel nur Bestandteil einer einzigen Schaufelanordnung. Allgemein ist entsprechend in einer Ausführung der vorliegenden Erfindung jede Laufschaufel stets eindeutig nur Bestandteil jeweils einer ersten oder einer zweiten (oder gegebenenfalls einer dritten) Schaufelanordnung. Es wird auch deutlich, dass auch in der Ausführung der Fig. 2 an jeder ersten Schaufel A1, A2,... jeweils ein erster Körper a und an jeder zweiten Schaufel B1, B2,.... jeweils ein zweiter Körper b beweglich gelagert ist.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt. 1 Rotor 2 Aussparung a erste(r) Körper(anordnung) b zweite(r) Körper(anordnung) A1,...,A5 erste Schaufel(anordnung) B1, B2 zweite Schaufel(anordnung) U1, U2 erste Schaufelanordnung V1,...,V4 zweite Schaufelanordnung

## Patentansprüche

1. Schaufelgitter für eine Turbomaschine, das
eine erste Gruppe mit
wenigstens zwei, insbesondere wenigstens drei, untereinander gleichartigen ersten Schaufelanordnungen (A1,...A5; U1, U2),
an denen einander gleiche erste Körperanordnungen mit je wenigstens einem ersten Körper (a) beweglich gelagert sind; und
eine zweite Gruppe mit
wenigstens zwei, insbesondere wenigstens drei, untereinander gleichartigen und zu den ersten Schaufelanordnungen verschiedenartigen zweiten Schaufelanordnungen (B1, B2; V1,...V4) aufweist,
an denen untereinander gleiche und von den ersten Körperanordnungen verschiedene zweite Körperanordnungen mit je wenigstens einem zweiten Körper (b) beweglich gelagert sind.

2. Schaufelgitter nach Anspruch 1, **gekennzeichnet durch** eine dritte Gruppe mit
wenigstens zwei, insbesondere wenigstens drei, untereinander gleichartigen und zu den ersten und zweiten Schaufelanordnungen verschiedenartigen dritten Schaufelanordnungen,
an denen einander gleiche dritte Körperanordnungen mit je wenigstens einem dritten Körper beweglich gelagert sind,
wobei erste, zweite und dritte Körperanordnungen voneinander verschieden sind.

3. Schaufelgitter nach einem der vorhergehenden Ansprüche, **dadurch gekennzeichnet, dass** die Schaufelanordnungen (A1,...A5, B1, B2) wenigstens einer der Gruppen jeweils genau eine Schaufel (A1,...A5, B1, B2) aufweisen, an der die Körperanordnung beweglich gelagert ist.

4. Schaufelgitter nach einem der vorhergehenden Ansprüche, **dadurch gekennzeichnet, dass** die Schaufelanordnungen (U1, U2, V1,...V4) wenigstens einer der Gruppen jeweils ein Paar (A1+A2, A3+A4, A2+B1, B1+A3, A4+B2, B2+A5) in Umfangsrichtung benachbarter gleich- oder verschiedenartiger Schaufeln aufweisen, an denen die Körperanordnung jeweils beweglich gelagert ist.

5. Schaufelgitter nach einem der vorhergehenden Ansprüche, **dadurch gekennzeichnet, dass** an einer Mehrheit unter den untereinander gleichartigen Schaufelanordnungen wenigstens einer der Gruppen einander gleiche Körperanordnungen beweglich gelagert sind.

6. Schaufelgitter nach einem der vorhergehenden Ansprüche, **dadurch gekennzeichnet, dass** zueinander verschiedenartige Schaufelanordnung verschieden hergestellt, insbesondere ur- und/oder umgeformt und/oder bearbeitet, sind, insbesondere unterschiedliche Konturen, Massen, Massenverteilungen und/oder monokristalline Werkstoffe mit unterschiedlichen Kristallorientierungen aufweisen.

7. Schaufelgitter nach einem der vorhergehenden Ansprüche, **dadurch gekennzeichnet, dass** voneinander verschiedene Körperanordnungen eine unterschiedliche Anzahl von Körpern und/oder Körper mit unterschiedlichen Konturen, Massen und/oder Massenverteilungen, Position, Orientierungen und/oder Lagerungen aufweisen.

8. Schaufelgitter nach einem der vorhergehenden Ansprüche, **dadurch gekennzeichnet, dass** wenigstens ein Körper einer der Körperanordnungen an einem Außendeckband, einem Innendeckband oder einem Schaufelblatt der Schaufelanordnung angeordnet ist.

9. Turbomaschine, insbesondere Gasturbine, insbesondere Flugtriebwerk, mit einem Schaufelgitter, insbesondere einem Lauf- oder Leitgitter, insbesondere einer Turbinen- oder Verdichterstufe, nach einem der vorhergehenden Ansprüche.

10. Verfahren zum Herstellen eines Schaufelgitters nach einem der vorhergehenden Ansprüche, **gekennzeichnet durch** die Schritte:
Anordnen der ersten Gruppe von ersten Schaufelanordnungen, an denen die einander gleichen ersten Körperanordnungen beweglich gelagert werden, und;
Anordnen der zweiten Gruppe von zu den ersten Schaufelanordnungen verschiedenartigen zweiten Schaufelanordnungen, an denen die einander gleichen und von den ersten Körperanordnungen verschieden zweiten Körperanordnungen beweglich gelagert werden.
